# EUROPEAN PATENT APPLICATION

(11) **EP 2 846 086 A1**
(43) Date of publication of application: **11.03.2015**
(21) Application number: 14170163.1
(22) Date of filing: 28.05.2014
(51) Int. Cl.: F21V 33/00, F21V 8/00, G09F 13/04, G09F 13/18, G09F 19/22

(54) **Indicating light for transportation**

(30) Priority: 04.09.2013 TW 102216615 U
(71) Applicant: Chao-Wei Precision Co., Ltd., Taichung City (TW)
(72) Inventor: Liao, Yung-Yuan, Taichung City (TW); Liao, Chao-Che, Taichung City (TW)
(74) Representative: Viering, Jentschura & Partner Patent- und Rechtsanwälte

(57) **Abstract**

An indicating light for transportation has a circuit board (20), a reflective layer (30) and a light guide plate (40) sequentially attached. Multiple LEDs (21) are mounted on the circuit board (20) and emit light. The light guide plate (40) has an inner surface and an outer surface, wherein at least one indicating portion (41) is formed on the inner surface for reflecting or refracting light of the LEDs (221) to the outer surface. The reflective layer (30) further prevents light leakage. Therefore, the indication portion (41) generates a surface light effect for reducing glare and providing an enlarged illuminating area.

## Description

### 1. Field of the Invention

The present invention relates to an indicating light, and more particularly to an indicating light for transportation.

### 2. Description of the Prior Art

With the advantage of low power consumption, LEDs have been popularly applied on different objects in people's lives, for example, LED indicating lights for bicycles. The LEDs have characters of small beam angle and high directionality to enhance efficiency of light concentrating and get high luminance. However, in another aspect, the LEDs will easily cause irritating glare to human eyes and are difficult to generate a wide-angle (>120 degrees) and uniform illumination area. Therefore, the LED light often utilizes multiple LEDs arranged in a circular shape to increase the uniform illumination of a wide angle.

In addition to changing the arrangement of the LEDs, as the LED light usually has a transparent lid covering and protecting the LEDs, the illumination performance of the LED light can be improved by modifying the structure of the transparent lid. For example, on an inner surface of the transparent lid, multiple small protrusions can be formed to provide a refraction effect for a wide angle illumination.

For the design of traditional LED light, it is still difficult to get a uniform illumination of a wide angle without irritating glare by arrangement of LED or optical design of lid covering.

An objective of the present invention is to provide an indicating light for transportation, wherein the indicating light provides a curved or a flat surface light effect for overcoming the glare problem, achieving a wide angle illumination and increasing illumination area.

The indicating light for transportation comprises a circuit board, a reflective layer and a light guide plate.

The light guide plate has at least one edge, an inner surface attached to the reflective layer and facing toward the circuit board, an outer surface opposite to the inner surface, and an indicating portion formed on the inner surface of the light guide plate.

The circuit board has a surface and multiple LEDs mounted on the surface of the circuit board, wherein each LED has a light emitting surface facing the at least one edge of the light guide plate, and light generated by the LEDs is reflected or refracted to the outer surface by the indicating portion.

The reflective layer is sandwiched between the circuit board and the light guide plate for reflecting the light of the LEDs.

After the circuit board, the reflective layer and the light guide plate are sequentially mounted together, and the LEDs emit light toward the edge of the light guide plate. The light of the LEDs is guided into the light guide plate and the directivity of the light is changed by the indication portion to produce a surface light effect. Therefore, the illuminating angle and illuminating area will be increased, and the glare problem will also be mitigated.

Other objectives, advantages and novel features of the invention will become more apparent from the following detailed description when taken in conjunction with the accompanying drawings.
Fig. 1 is an exploded perspective view of an indicating light of the present invention;
Fig. 2 is a perspective view of the indicating light of the present invention;
Fig. 3 is an exploded perspective view of the indicating light of Fig. 2;
Fig. 4 is a cross sectional view showing a part of the indicating light of the present invention, wherein the light emitted from the LEDs is reflected by the indicating portion of the light guide plate;
Fig. 5 is an operational view of the indicating light of the present invention being mounted on a bicycle frame;
Fig. 6 is another operational view of the indicating light of the present invention;
Fig. 7 is still another operational view of the indicating light of the present invention, wherein the indicating light has an indicating portion of an animal pattern; and
Fig. 8 is another exploded perspective view of the indicating light of the present invention.

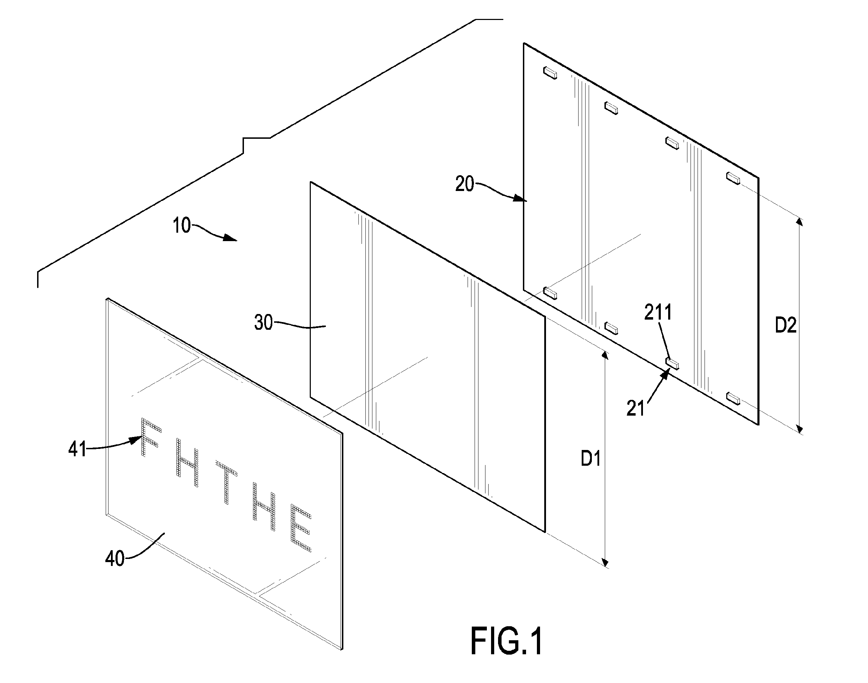

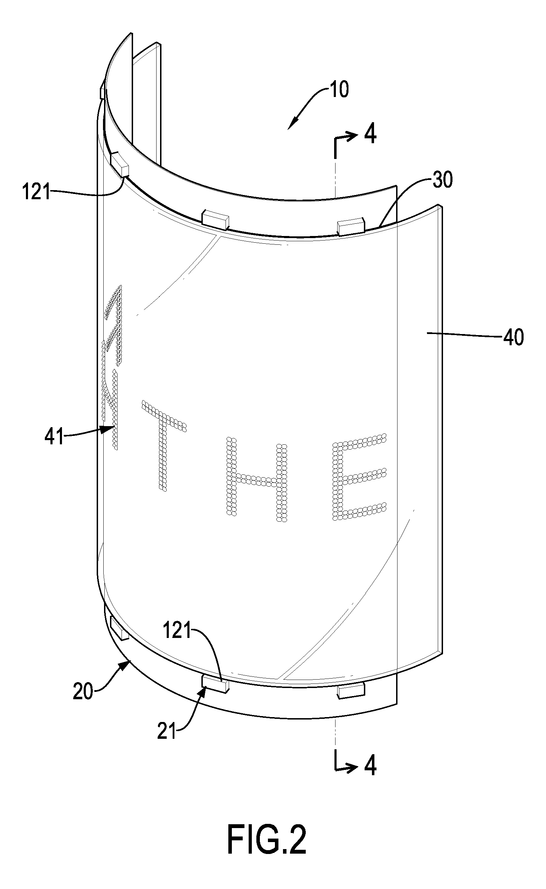

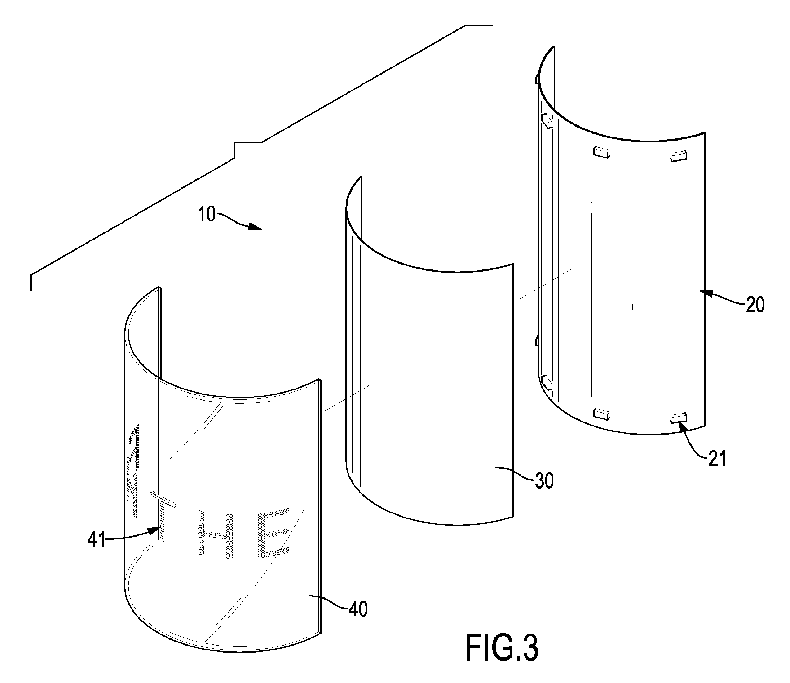

With reference to Figs. 1 to 3, a first embodiment of an indicating light 10 of the present invention comprises a circuit board 20, a reflective layer 30 and a light guide plate 40. The reflective layer 30 and the light guide plate 40 are sequentially attached to the circuit board 20 and are sheet-shaped. As shown in Fig. 1, the circuit board 20, the reflective layer 30 and the light guide plate 40 are flat sheets. As shown in Figs. 2 and 3, the circuit board 20, the reflective layer 30 and the light guide plate 40 may have flexibility and are in forms of curved sheets. For example, the circuit board 20, the reflective layer 30 and the light guide plate 40 can be bent to have an S-shaped cross section, a V-shaped cross section, a U-shaped cross section or a circular cross section.

The circuit board 20 is rectangular and has a surface, two long edges and two short edges. Multiple LEDs 21 are mounted on the surface of the circuit board 20 and controlled by the circuit board 20 to generate different lighting effects such as changing colors and flickering. The LEDs 21 are separated from one another and may be distributed along the two long edges, along the two short edges, or along one long edge and one short edge of the circuit board 20. When the LEDs 21 are mounted along the two long edges or the two short edges, the LEDs 21 located at one edge may align or misalign with the LEDs 21 located at the opposite edge.

As shown in Fig 2, the LEDs 21 are distributed in two rows respectively along the two long edges of the circuit board 20, wherein light emitting surfaces 211 of the LEDs 21 at one edge face toward light emitting surfaces 211 of the LEDs 21 at the opposite edge.

In another embodiment, when the circuit board 20 has a circular shape, the LEDs 21 can be arranged along the edge of the circuit board 20. If the circuit board 20 has a polygonal shape, the LEDs 21 may be arranged along any two or more than two edges of the circuit board 20. The circuit board 20 is not limited to a specific shape, and can be modified by demand. An external power module may be connected to the circuit board 20 for supplying operating voltages to the circuit board 20 and the LEDs 21.

The reflective layer 30 is a thin and rectangular layer with two long edges in this embodiment. A distance D1 between the two long edges of the reflective layer 30 is smaller than a distance D2 between the two rows of the LEDs 21. The reflective layer 30 is provided on the surface of the circuit board 20 and between the two rows of the LEDs 20. The reflective layer 30 may be a separate element mounted on the circuit board 20, a film formed by a film-coating process on the surface of the circuit board 20, or a film formed by the film-coating process on a surface of the light guide plate 40 facing the circuit board 20.

At least one edge of the light guide plate 40 faces the light emitting surfaces 211 of the LEDs 21. The light guide plate 40 has an inner surface and an outer surface, wherein the inner surface faces toward the reflective layer 30 and the outer surface is opposite to the inner surface. On the inner surface of the light guide plate 40, an indicating portion 41 is formed by a plurality of concave dents or protruding bumps.

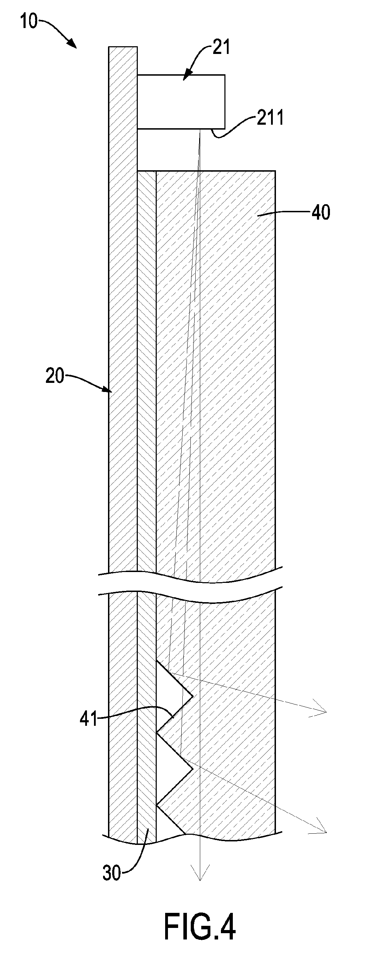

With reference to Fig. 4, the indicating portion 41 in this embodiment is formed by a plurality of concave dents as light guide structures for reflecting or refracting light generated by the LEDs 21 to the outer surface of the light guide plate 40. Furthermore, the light of the LEDs 41 is also reflected to the outer surface of the light guide plate 40 by the reflective layer 30. The indicating portion 41 may be formed as a character, letters, or a pattern. For example, the indicating portion 41 in Fig. 3 is formed into five letters F, H, T, H and E.

In the embodiment that the indicating portion 41 is formed by a plurality of bumps, the bumps protrude from the inner surface of the light guide plate 40 and toward the reflective layer 30 and the plurality of the bumps are comprised of multiple pairs of adjacent bumps.

When the reflective layer 30 is formed by the film-coating process, the indicating portion 41 will be formed on the inner surface of the light guide plate 40 in advance, and then the reflective layer 30 will be coated on the inner surface of the light guide plate 40.

In brief, the light generated by the LEDs 21 of the circuit board 20 emits toward the edge of the light guide plate 40, and is guided by the indicating portion 41 for being transmitted outwardly. The reflective layer 30 is utilized to further reflect the light of the LEDs 21 to the light guide plate 40 and reduce light losing from the inner surface of the light guide plate 40. By providing the indicating portion 41 as the light guide structure and arranging the LEDs 21 beside the light guide plate 41, the outer surface of the light guide plate 40 will generate a surface light effect for reducing the glare and having an enlarged illuminating area.

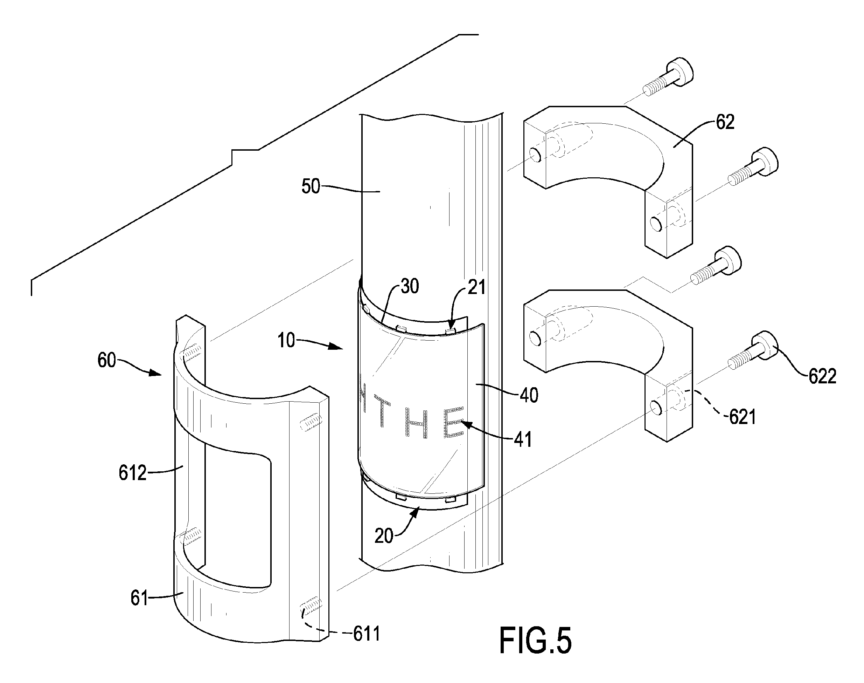

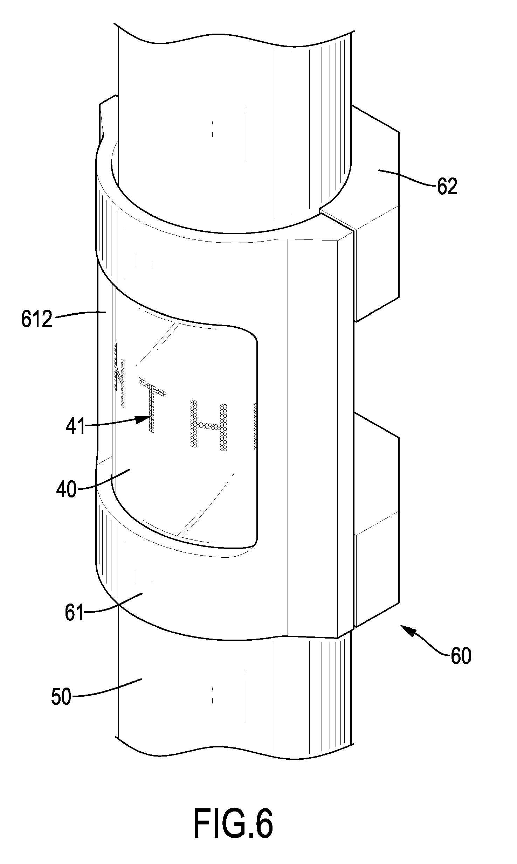

With reference to Figs. 5 and 6, the indicating light 10 of the present invention is to be mounted on a tube 50 of a bicycle frame. A fastening assembly 60 is applied to securely mount the indicating light 10 to the tube 50. The fastening assembly 60 comprises a front shell 61 and two rear covers 62. The front shell 61 is U-shaped in cross section and forms an opening 612 and multiple threaded holes 611. The opening 612 is formed through a central portion of the front shell 61 and is large enough to expose the character or pattern formed by the indicating portion 41. Each rear cover 62 is also U-shaped and has two through holes 621. The rear covers 62 are fastened to the front shell 61 by screws 622 through the through holes 621 and then are fixed in the threaded holes 611. Thus, the tube 50 together with the indicating light 10 are held between the front shell 61 and the rear covers 62.

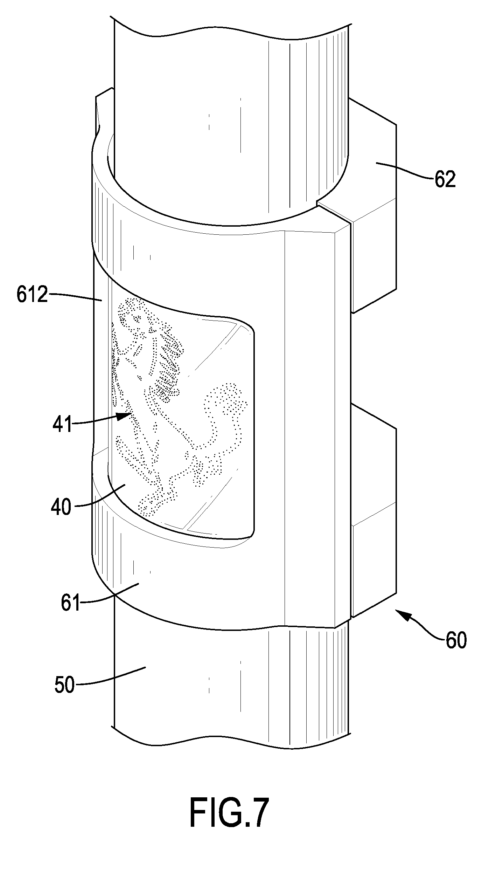

With reference to Fig. 7, the indicating portion 41 is formed as a pattern of an animal, and the light guide plate 40 is replaceable for changing the pattern of the indicating portion 41.

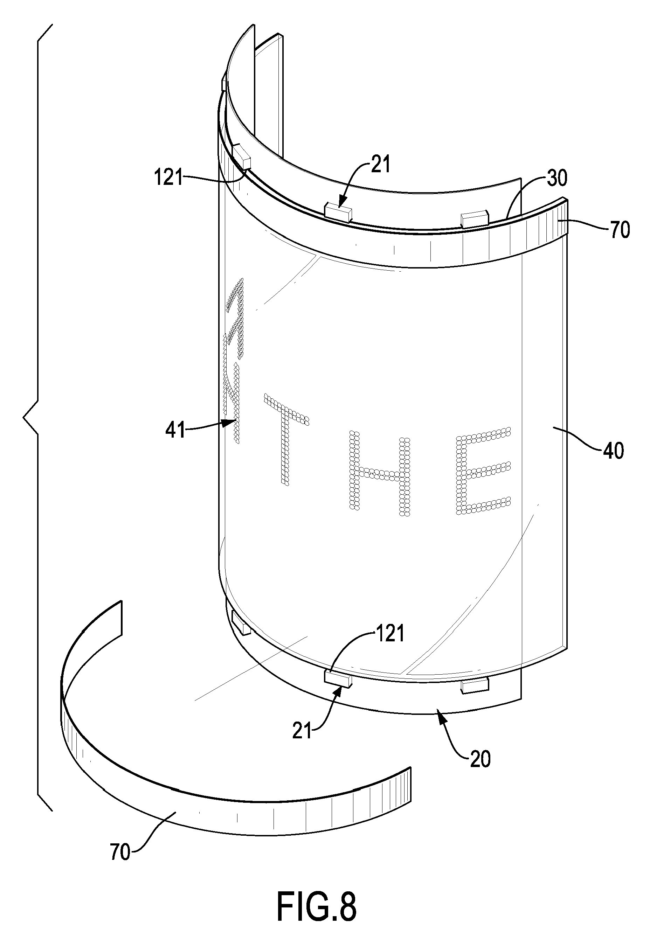

With reference to Fig. 8, the indicating light 10 further comprises two reflective strips 70. The two reflective strips 70 are mounted on the outer surface of the light guide plate 40 and are respectively aligned with the opposite edges of the light guide plate 40 and adjacent to the two rows of the LEDs 41. When the light emitted by the LEDs 41 passes through the light guide plate 40, the reflective strips 70 can further reflect the light to increase brightness of the light guide plate 40.

## Claims

1. An indicating light for transportation comprising a circuit board (20), a reflective layer (30) and a light guide plate (40), **characterized in that**:
the light guide plate (40) having
at least one edge;
an inner surface attached to the reflective layer (30) and facing toward the circuit board (20);
an outer surface opposite to the inner surface; and
an indicating portion (41) formed on the inner surface of the light guide plate (40);
the circuit board (20) having
a surface; and
multiple LEDs (21) mounted on the surface of the circuit board (20), wherein each LED (21) has a light emitting surface (211) facing the at least one edge of the light guide plate (30), and light generated by the LEDs (21) is reflected or refracted to the outer surface by the indicating portion (41); and
the reflective layer (30) being sandwiched between the circuit board (20) and the light guide plate (40) for reducing the light losing from the inner surface of the light guide plate (40).

2. The indicating light for transportation as claimed in claim 1, wherein the indicating portion (41) of the light guide plate (40) is formed by a plurality of dents on the inner surface of the light guide plate (40).

3. The indicating light for transportation as claimed in claim 2, wherein the plurality of dents are arranged in a form of a character or a pattern.

4. The indicating light for transportation as claimed in claim 1, wherein the indicating portion (41) of the light guide plate (40) is formed by a plurality of bumps protruding from the inner surface of the light guide plate (40).

5. The indicating light for transportation as claimed in claim 4, wherein the plurality of bumps are arranged in a form of a character or a pattern.

6. The indicating light for transportation as claimed in any claim of claims 1-5, wherein the circuit board (20) has four edges, the LEDs (21) are mounted along any two of the edges of the circuit board (20), and the light emitting surfaces (211) of the LEDs (21) at the same edge face opposite directions.

7. The indicating light for transportation as claimed in claim 6, wherein the LEDs (21) along any two of the edges of the circuit board (20) are separated from one another.

8. The indicating light for transportation as claimed in any claim of claims 1-5, wherein the circuit board (20) is circular, and the LEDs (21) are mounted along the edges of the circuit board (20).

9. The indicating light for transportation as claimed in any claim of claims 1-5, wherein the circuit board (20) has five edges, and the LEDs (21) are mounted along at least two of the edges of the circuit board (20).

10. The indicating light for transportation as claimed in any claim of claims 1-9, wherein the circuit board (20), the reflective layer (30) and the light guide plate (40) are flexible and bendable to have an S-shaped cross section, a V-shaped cross section, or a U-shaped cross section.

11. The indicating light for transportation as claimed in any claim of claims 1-10, wherein the reflective layer (30) is a film coated on the surface of the circuit board (20).

12. The indicating light for transportation as claimed in any claim of claims 1-10, wherein the reflective layer (30) is a film coated on the inner surface of the light guide plate (40).
